# EUROPÄISCHE PATENTSCHRIFT

(11) **EP 1 865 280 B1**
(45) Veröffentlichungstag und Bekanntmachung des Hinweises auf die Patenterteilung: **12.08.2009**
(21) Anmeldenummer: 07002493.0
(22) Anmeldetag: 06.02.2007
(51) Int. Cl.: G01B 5/18, G01D 5/347

(54) **Maßstab mit einem reflektierenden Phasengitter**
Measuring scale with a reflective phase jitter
Echelle dotée d'un réseau de phase réfléchissant

(30) Priorität: 10.06.2006 DE 102006027047
(43) Veröffentlichungstag der Anmeldung: 12.12.2007
(73) Patentinhaber: Dr. Johannes Heidenhain GmbH, 83301 Traunreut (DE)
(72) Erfinder: Flatscher, Georg, 83458 Schneizlreuth (DE)

(56) Entgegenhaltungen:
- EP-A- 0 773 458
- DE-A1- 10 150 099

## Beschreibung

Die Erfindung betrifft einen Maßstab mit einem reflektierenden Phasengitter. Solche Maßstäbe kommen in hochgenauen, interferentiellen Positionsmesssystemen zum Einsatz.

Mit der Weiterentwicklung von Positionsmesssystemen, die auf der Abtastung von optischen Maßstäben beruhen, steigen die Anforderungen an solche Maßstäbe immer weiter an. Neben möglichst feinen Gitterstrukturen, deren Gitterkonstante in Messrichtung bereits im Submikrometerbereich liegt und damit Messschritte im Subnanometerbereich ermöglicht, müssen die Maßstabsgitter auch eine möglichst gute Reflektivität aufweisen. Aus diesem Grund kommen für hochgenaue Auflichtsysteme Phasengitter zum Einsatz, die einfallendes Licht möglichst vollständig reflektieren.

In modernsten Positionsmesssystemen, wie sie beispielsweise in der EP 1319170 B1 beschrieben sind, wird das Licht einer Lichtquelle mehrmals auf den Maßstab gelenkt, dort in unterschiedliche Beugungsordnungen aufgespaltet und reflektiert, bevor es dann auf einen Photodetektor trifft und dort periodische Signale abhängig von der zu messenden Position erzeugt.

Bisher erreichte Reflektivitäten der Phasengitter im Bereich von 50 - 70% reichen nicht mehr aus, um ein gutes Detektorsignal zu erzielen. Es werden daher Reflektivitäten von 90% und mehr gefordert.

In der EP 0 773 458 B1, von der diese Anmeldung ausgeht, ist ein Maßstab mit einem reflektierenden Phasengitter beschrieben. Dieses Phasengitter weist einen auf einem Substrat angeordneten reflektierenden Schichtstapel aus hoch brechenden und niedrig brechenden Schichten auf. Dieser Maßstab weist zwischen 8 und 14 Schichten auf und ist damit aufwändig in der Herstellung.

Aufgabe der Erfindung ist es, einen Maßstab mit einem reflektierenden Phasengitter anzugeben, das einfach aufgebaut ist und dennoch eine besonders hohe Reflektivität erzielt.

Diese Aufgabe wird gelöst durch eine Vorrichtung mit den Merkmalen des Anspruches 1. Vorteilhafte Ausführungsformen ergeben sich aus den Merkmalen, die in den von Anspruch 1 abhängigen Ansprüchen aufgeführt sind.

Es wird ein Maßstab mit einem reflektierenden Phasengitter beschrieben, das abwechselnd hoch brechende Schichten und niedrig brechende Schichten als reflektierenden, auf einem Substrat angeordneten Schichtstapel (3) aufweist. Die hoch brechenden Schichten bestehen aus Silizium, die niedrig brechenden Schichten aus Siliziumdioxid.

Da Silizium für die typischerweise in optischen Positionsmesssystemen der hier betrachteten Art verwendeten Lichtwellenlängen von 850 - 900nm (naher Infrarotbereich) durchsichtig ist und einen recht hohen Brechungsindex aufweist (n > 4 für eine Wellenlänge von 880nm), kann die Zahl der Schichten im Schichtstapel recht klein ausfallen, der Aufbau des Phasengitters wird dadurch wesentlich vereinfacht. Verwendet man als unterste, dem Substrat zugewandte Schicht im Schichtstapel eine NiCr80/20 - Schicht, lassen sich Reflektivitäten von mehr als 90 % erzielen.

Zur Herstellung der Phasengitterstruktur wird die oberste Schicht als Siliziumschicht ausgebildet. Solche Siliziumschichten lassen sich mit hoher Qualität durch einen plasmachemischen Prozess strukturieren, wobei die unter der obersten Siliziumschicht liegende Schicht aus Siliziumdioxid als Ätzstop wirkt. Mit einem recht einfachen Prozess lassen sich so hochwertige Gitterstrukturen fertigen, die ein sehr sauberes Signal für die nachfolgende Verarbeitung im Positionsmesssystem gewährleisten.

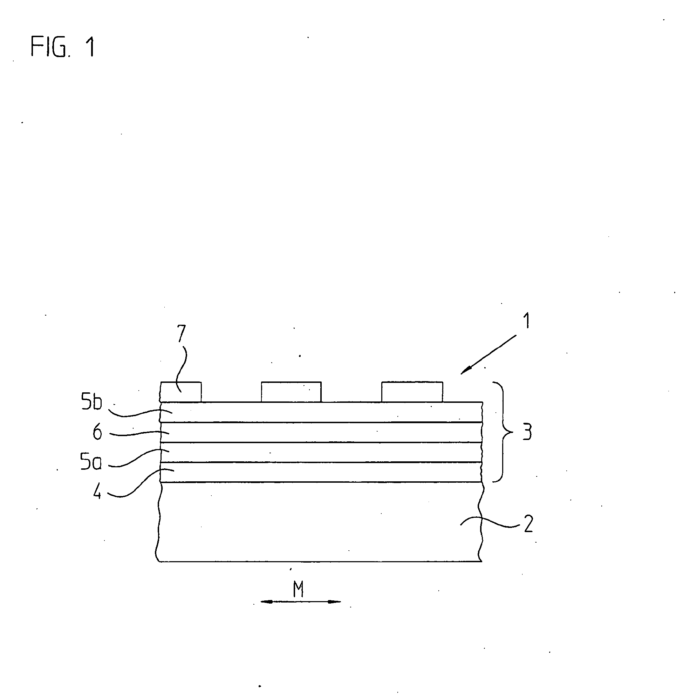

Weitere Vorteile sowie Einzelheiten der vorliegenden Erfindung ergeben sich aus der nachfolgenden Beschreibung einer bevorzugten Ausführungsform anhand der Figur 1, die einen Querschnitt durch einen Maßstab mit einem besonders bevorzugten Phasengitter zeigt.

Die Figur 1 zeigt in einem Querschnitt einen Maßstab 1. Der Schnitt liegt dabei in einer Ebene mit der Messrichtung M, sowie senkrecht zu den einzelnen Schichten des Schichtstapels 3, aus dem das auf einem Substrat 2 angeordnete Phasengitter aufgebaut ist.

Ein entscheidender Bestandteil des Phasengitters ist der Schichtstapel 3, der aus abwechselnd angeordneten niedrig brechenden Schichten 5a, 5b aus Siliziumdioxid und hoch brechenden Schichten 6, 7 aus Silizium aufgebaut ist. Solche dielektrischen Schichtstapel sind aus der Optik bekannt und reflektieren einfallendes Licht einer bestimmten Wellenlänge sehr gut, wenn die Dicke der einzelnen Schichten auf die Lichtwellenlänge abgestimmt ist.

Um die Reflektivität des Phasengitters weiter zu erhöhen, befindet sich im Schichtstapel 3 eine dem Substrat zugewandte Bodenschicht 4 aus einer Nickel - Chrom - Legierung (NiCr80/20). Auf dieser ca. 100 nm dicken NiCr80/20 - Schicht 4 liegt eine Siliziumdioxidschicht 5a mit einer Dicke von 157 nm, gefolgt von einer 45 nm dicken Schicht 6 aus Silizium. Die darauf liegende weitere Siliziumdioxidschicht 5b ist 95 nm dick.

Die genannten Schichtdicken wurden für eine Wellenlänge von 850 nm für das zur Abtastung des Maßstabes 1 verwendete Licht so optimiert, dass die 0. Beugungsordnung möglichst unterdrückt wird, während die beiden 1. Beugungsordnungen, die für die Positionsmessung verwendet werden, ein Maximum aufweisen. Die Schichtdicken im Schichtstapel (3) sind also so gewählt, dass einfallendes, zur Abtastung des Maßstabes (1) verwendetes monochromatisches Licht bevorzugt in die ersten Beugungsordnungen gebeugt wird, während die 0. Beugungsordnung unterdrückt wird. Der Einfallswinkel des Lichtes auf den Maßstab 1 kann dabei im Bereich von 0 - 30 Grad liegen, wobei 0 Grad einen Lichteinfall senkrecht zur Maßstabsoberfläche bedeutet.

Die oberste Siliziumschicht 7 mit einer Dicke von ca. 17 nm ist strukturiert und bewirkt letztlich die Phasenmodulation des reflektierten Lichtes. Die Gitterstrukturen (z.B. parallele Gitterstriche) sind senkrecht zur Zeichenebene erstreckt und periodisch in Messrichtung M. In Bereichen, in denen das Silizium der obersten Schicht 7 entfernt wurde, ist die optische Weglänge, die das reflektierte Licht zurückgelegt hat, um 2 * (n-1) * D geringer als in Bereichen, in denen das Silizium der obersten Schicht 7 vorhanden ist. D ist dabei die Dicke der obersten Siliziumschicht 7, n der Brechungsindex dieser Schicht.

Die genannten Schichtdicken sind Richtwerte, von denen um einige Nanometer abgewichen werden kann, ohne die Qualität des Maßstabes 1 wesentlich zu beeinträchtigen. Es lassen sich natürlich auch andere Kombinationen von Schichtdicken finden, die eine ähnlich gute Reflektivität aufweisen.

Besonders vorteilhaft ist, dass bei der Strukturierung der obersten Siliziumschicht ein plasmachemischer Prozess verwendet werden kann. Da ein solcher Prozess auf der darunter liegenden Siliziumdioxidschicht 5b stoppt und diese damit freilegt, erhält man sehr sauber definierte Strukturen. Zudem wird mit nur fünf Schichten eine Reflektivität von 90 % erreicht, so dass auch nach mehrfachen Reflexionen des Lichts am Maßstab ein gutes Signal in den Photodetektoren eines Positionsmesssystems erzielt werden kann.

Durch die sehr geringe Dicke von 17 nm der obersten strukturierten Schicht 7 entstehen Stufen von so geringer Höhe, dass sich Verschmutzungen in den Vertiefungen bzw. an den Stufen kaum ansammeln können. Der Maßstab 1 ist daher sehr verschmutzungsunempfindlich.

Als Substrat 2 dient vorzugsweise ein Material mit einem thermischen Ausdehnungskoeffizienten nahe 0, beispielsweise betragsmäßig kleiner als 0,05 ppm / K. Ein solches Material ist z.B. unter dem Handelsnamen Zerodur erhältlich. Je nach Applikation können sich aber auch andere Materialien wie Quarzglas, Stahl, Keramik oder Silizium als Substrat eigenen.

## Patentansprüche

1. Maßstab für ein interferentielles Positionsmesssystem, mit einem reflektierenden Phasengitter, das abwechselnd hoch brechende Schichten (6, 7) und niedrig brechende Schichten (5a, 5b) in einem reflektierenden, auf einem Substrat (2) angeordneten Schichtstapel (3) aufweist, **dadurch gekennzeichnet, dass** die hoch brechenden Schichten (6, 7) aus Silizium bestehen, und die niedrig brechenden Schichten (5a, 5b) aus Siliziumdioxid bestehen.

2. Maßstab nach Anspruch 1, **dadurch gekennzeichnet, dass** eine vom Substrat abgewandte oberste Schicht (7) des Schichtstapels (3) strukturiert ist.

3. Maßstab nach Anspruch 2, **dadurch gekennzeichnet, dass** die oberste Schicht (7) so strukturiert ist, dass die darunter liegende niedrig brechende Schicht (5b) frei gelegt ist.

4. Maßstab nach Anspruch 2 oder 3, **dadurch gekennzeichnet, dass** die oberste Schicht (7) eine in einer Messrichtung (M) periodische Gitterstruktur trägt.

5. Maßstab nach einem der Ansprüche 2 - 4, **dadurch gekennzeichnet, dass** die oberste und strukturierte Schicht (7) des Schichtstapels (3) aus Silizium besteht.

6. Maßstab nach einem der Ansprüche 2 - 5, **dadurch gekennzeichnet, dass** eine phasenmodulierende Wirkung des Phasengitters auf der Strukturierung der obersten Schicht (7) beruht.

7. Maßstab nach einem der vorhergehenden Ansprüche, **dadurch gekennzeichnet, dass** eine dem Substrat (2) zugewandte Bodenschicht (4) des Schichtstapels (3) eine Nickel-Chrom-Schicht ist.

8. Maßstab nach Anspruch 7, **dadurch gekennzeichnet, dass** die Bodenschicht (4) eine NiCr80/20 - Schicht ist.

9. Maßstab nach einem der vorhergehenden Ansprüche, **dadurch gekennzeichnet, dass** der Schichtstapel (3) ausgehend vom Substrat (2) eine unstrukturierte metallische Bodenschicht (4), eine erste unstrukturierte und niedrig brechende Schicht (5a), eine unstrukturierte und hoch brechende Schicht (6), eine zweite unstrukturierte und niedrig brechende Schicht (5b), sowie eine strukturierte hoch brechende Schicht (7) aufweist.

10. Maßstab nach Anspruch 9, **dadurch gekennzeichnet, dass** die unstrukturierte metallische Bodenschicht (4) eine Dicke von 100 nm aufweist, die erste unstrukturierte und niedrig brechende Schicht (5a) eine Dicke von 157 nm aufweist, die unstrukturierte und hoch brechende Schicht (6) eine Dicke von 45 nm aufweist, die zweite unstrukturierte und niedrig brechende Schicht (5b) eine Dicke von 95 nm aufweist, sowie die strukturierte hoch brechende Schicht (7) eine Dicke von 17 nm aufweist.

11. Maßstab nach einem der vorhergehenden Ansprüche, **dadurch gekennzeichnet, dass** die Schichtdicken im Schichtstapel. (3) so gewählt sind, dass einfallendes, zur Abtastung des Maßstabes (1) verwendetes Licht bevorzugt in die ersten Beugungsordnungen gebeugt wird.

12. Maßstab nach einem der vorhergehenden Ansprüche, **dadurch gekennzeichnet, dass** das Substrat (2) aus einem Material mit einem thermischen Ausdehnungskoeffizienten von betragsmäßig kleiner als 0,05 ppm / K besteht.

13. Maßstab nach Anspruch 12, **dadurch gekennzeichnet, dass** das Substrat aus Zerodur besteht.

## Claims

1. A scale for an interferential position-measuring system, with a reflecting phase grating, which alternately has high-refractive index layers (6, 7) and low-refractive index layers (5a, 5b) in the reflecting layer stack (3) arranged on a substrate (2), **characterised in that** the high-refractive index layers (6, 7) consists of silicon, and the low-refractive index layers (5a, 5b) consist of silicon dioxide.

2. The scale according to Claim 1,
**characterised in that** an uppermost layer (7) of the layer stack (3) facing away from the substrate is structured.

3. The scale according to Claim 2,
**characterised in that** the uppermost layer (7) is structured such that the low-refractive index layer (5b) that lies underneath it is exposed.

4. The scale according to Claim 2 or 3,
**characterised in that** the uppermost layer (7) supports a periodic grating structure in a measurement direction (M).

5. The scale according to one of the Claims 2 - 4,
**characterised in that** the uppermost and structured layer (7) of the layer stack (3) consists of silicon.

6. The scale according to one of the Claims 2 -5,
**characterised in that** a phase-modulating effect of the phase grating depends on the structuring of the uppermost layer (7).

7. The scale according to one of the preceding claims,
**characterised in that** a base layer (4) of the layer stack (3) facing towards the substrate (2) is a nickel-chrome layer.

8. The scale according to Claim 7,
**characterised in that** the base layer (4) is a NiCr80/20 layer.

9. The scale according to one of the preceding claims,
**characterised in that** the layer stack (3) starting from the substrate (2) has an unstructured metallic base layer (4), a first unstructured and low-refractive index layer (5a), an unstructured and high-refractive index layer (6), a second unstructured and low-refractive index layer (5b), and a structured high-refractive index layer (7).

10. The scale according to Claim 9,
**characterised in that** the unstructured metallic base layer (4) has a thickness of 100 nm, with the first unstructured and low-refractive index layer (5a) has a thickness of 157 nm, the unstructured and high-refractive index layer (6) has a thickness of 45 nm, the second unstructured and low-refractive index layer (5b) has a thickness of 95 nm, and the structured high-refractive index layer (7) has a thickness of 17 nm.

11. The scale according to one of the preceding claims,
**characterised in that** the layer thicknesses in the layer stack (3) are selected such that incident light used for purposes of scanning the scale (1) is preferably diffracted into the first diffraction orders.

12. The scale according to one of the preceding claims,
**characterised in that** the substrate (2) consists of a material with a thermal expansion coefficient of less than 0.05 ppm / K according to amount.

13. The scale according to Claim 12,
**characterised in that** the substrate consists of Zerodur.

## Revendications

1. Règle pour système de mesure de position interférentiel, comportant un réseau de phase réfléchissant, qui présente en alternance des couches réfringentes hautes (6,7) et des couches réfringentes basses (5a,5b) dans une pile de couches (3) réfléchissantes, disposées sur un substrat (2), **caractérisée en ce que** les couches réfringentes hautes (6,7) sont constituées de silicium et les couches réfringentes basses (5a,5b) sont constituées d'oxyde de silicium.

2. Règle selon la revendication 1, **caractérisée en ce que** une couche la plus élevée (7) se détournant du substrat de la pile de couches (3) est structurée.

3. Règle selon la revendication 2, **caractérisée en ce que** la couche la plus élevée (7) est structurée, de telle sorte que la couche réfringente (5b) basse sous-jacente soit découverte.

4. Règle selon la revendication 2 ou 3, **caractérisée en ce que** la couche la plus élevée (7) supporte une structure de grille périodique dans une direction de mesure (M).

5. Règle selon une des revendications 2 à 4,
**caractérisée en ce que** la couche la plus élevée et structurée (7) de la pile de couches (3) est constituée de silicium.

6. Règle selon une des revendications 2 à 5,
**caractérisée en ce que** un effet modulateur de phase du réseau de phase repose sur la structuration de la couche la plus élevée (7).

7. Règle selon une des revendications précédentes, **caractérisée en ce que** une couche de fond (4) tournée vers le substrat (2) de la pile de couches (3) est une couche nickel-chrome.

8. Règle selon la revendication 7, **caractérisée en ce que** la couche de fond est une couche NiCr80/20.

9. Règle selon une des revendications précédentes, **caractérisée en ce que** la pile de couches (3) en partant du substrat (2) présente une couche de fond métallique non structurée (4), une première couche réfringente, basse et non structurée (5a), une couche réfringente, haute et non structurée (6), une deuxième couche réfringente, basse et non structurée (5b) ainsi qu'une couche réfringente, haute et structurée (7).

10. Règle selon la revendication 9, **caractérisée en ce que** la couche de fond métallique non structurée (4) présente une épaisseur de 100 nm, la première couche réfringente, non structurée et basse (5a) présente une épaisseur de 157 nm, la couche réfringente, haute et non structurée (6) présente une épaisseur de 45 nm, la deuxième couche réfringente, basse et non structurée (5b) présente une épaisseur de 95 nm, et la couche réfringente haute structurée (7) présente une épaisseur de 17 nm.

11. Règle selon une des revendications précédentes, **caractérisée en ce que** les épaisseurs des couches dans la pile de couches (3) sont sélectionnées de telle sorte que la lumière incidente, utilisée pour balayer la règle (1) est diffractée dans les premiers ordres de diffraction.

12. Règle selon une des revendications précédentes, **caractérisée en ce que** le substrat (2) est constitué d'un matériau avec un coefficient de dilatation thermique proportionnellement inférieur à 0,05 ppm/K.

13. Règle selon la revendication 12, **caractérisée en ce que** le substrat est constitué de Zerodur.
